(19) Europäisches Patentamt
European Patent Office
Office européen des brevets

(11) Veröffentlichungsnummer: **0 004 002**
**B1**

(12) **EUROPÄISCHE PATENTSCHRIFT**

(45) Veröffentlichungstag der Patentschrift: **22.09.82**

(51) Int. Cl.³: **B 22 C 1/00**, B 22 C 7/00, C 08 L 75/08

(21) Anmeldenummer: **79100533.3**

(22) Anmeldetag: **23.02.79**

# (54) Zweikomponentensystem zur Herstellung von abriebfesten Modellen und Werkzeugen, insbesondere für Zwecke der Giessereiindustrie.

(30) Priorität: **03.03.78 CH 2307/78**

(43) Veröffentlichungstag der Anmeldung: **19.09.79 Patentblatt 79/19**

(45) Bekanntmachung des Hinweises auf die Patenterteilung: **22.09.82 Patentblatt 82/38**

(84) Benannte Vertragsstaaten: **BE DE FR GB IT LU NL SE**

(56) Entgegenhaltungen:
FR - A - 2 189 460
GB - A - 1 203 943
US - A - 2 795 505
US - A - 2 951 053
US - A - 3 550 673

(73) Patentinhaber: **GEORG FISCHER AKTIENGESELLSCHAFT**
**Mühlentalstrasse 105**
**CH-8201 Schaffhausen (CH)**

(72) Erfinder: **Horber, Helmut**
**Rickelshausener Strasse 12**
**D-7760 Radolfzell 13 (DE)**
Erfinder: **Lange, Burkhard, Dr.**
**Stubenkreuz 2**
**D-7701 Hilzingen (DE)**
Erfinder: **Pauling, Horst**
**Kasernenstrasse 7**
**D-7760 Radolfzell (DE)**
Erfinder: **Steiner, Wilhelm**
**Alemannenstrasse 15**
**D-7700 Singen (DE)**

**EP 0 004 002 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Zweikomponentensystem zur Herstellung von abriebfesten Modellen und Werkzeugen, insbesondere für Zwecke der Giessereiindustrie

Die Erfindung betrifft ein Zweikomponentensystem zur Herstellung von abriebfesten Modellen und Werkzeugen, insbesondere für Zwecke der Giessereiindustrie.

Die in der Giessereitechnik eingesetzten Modelle und Werkzeuge sind insbesondere bei Serienfertigung in der Sandformerei einem extrem hohen Verschleiss ausgesetzt. Neben hoher Verschleissfestigkeit werden ausserdem gutes Abformverhalten und kurze Herstellzeiten für Neuanfertigungen und Aenderungen gefordert. Die bekannten Metallmodelle besitzen wohl eine gute Abriebfestigkeit, erfordern aber eine aufwendige und zeitraubende Bearbeitung bei Aenderungen und Neuanfertigungen.

Die als Metall-Ersatz vorgeschlagenen Epoxidharze weisen demgegenüber eine schlechte Abriebfestigkeit und eine unbefriedigende Oberfläche auf.

Die Verwendung von Polyurethanbindern ist an und für sich in der Giessereiindustrie schon bekannt; allerdings nicht als Modellwerkstoffe. Die GB-Patentschrift Nr. 1 203 943 offenbart beispielsweise die Verwendung eines speziellen polyurethanharzbildenden Systems als Bindemittel für Form- und Kernsande mit einem Gewichtsanteil von lediglich 1—2%. Die damit erhaltenen, vorwiegend aus Füllstoffen bestehenden Formkörper sind deshalb nicht als abriebfeste Modelle und Werkzeuge verwendbar.

Weitere bekannte Verwendungen von Polyurethansystemen betreffen die Herstellung von harten, elastischen Wachsen für Präzisionsgussverfahren (US-Patent Nr. 2 795 505), ein elastisches, gummiähnliches eine Molybdänverbindung enthaltendes Polyurethan (US-Patent Nr. 2 951 053) und eine Polyurethan-Elastomermasse, welche auf einem linearen Polyätherdiol aufgebaut ist (FR-Patent Nr. 2 189 460) und vorzugsweise als Dichtungskitt oder Klebemittel Verwendung findet.

Das US-Patent Nr. 3 550 673 betrifft zwar einen Gussartikel, welcher ein Polyurethan enthält, die Aushärtung erfolgt aber nicht durch eine Polyaddition zwischen Isocyanat- und Hydroxylgruppen, sondern zwischen Isocyanat- und Amingruppen. Das reaktionsfähige Zweikomponentensystem ist demzufolge auf Polyharnstoffbasis aufgebaut und vom erfindungsgemässen System grundverschieden.

Der Erfindung liegt die Aufgabe zugrunde, die Lebensdauer von Modellen und Werkzeugen, insbesondere für Zwecke der Giessereiindustrie wesentlich zu verlängern, die Herstellzeiten und -kosten erheblich zu senken und das Abformverhalten entscheidend zu verbessern.

Das Zweikomponentensystem zur Herstellung von abriebfesten Modellen und Werkzeugen, insbesondere für Zwecke der Giessereiindustrie, ist gemäss der Erfindung in der Weise ausgebildet, dass die A-Komponente mindestens ein tri- oder höherfunktionelles Polyol mit einem Molekulargewicht zwischen 200—800, entsprechend einer Hydroxilzahl zwischen 200—800, oder Mischungen davon mit einem linearen Polypropylenglykol mit einem Molekulargewicht von 500—3000, mindestens ein festes oder flüssiges Gleitmittel und übliche Additive enthält und die B-Komponente ein aromatisches Isocyanat oder Prepolymer hiervon enthält.

Des weiteren betrifft die Erfindung die Verwendung des Zweikomponentensystems zur Herstellung von abriebfesten Modellen und Werkzeugen durch Mischen der Komponente A mit der Komponente B, vorzugsweise im stöchiometrischen Verhältnis.

Ueberraschenderweise hat es sich gezeigt, dass die so erhaltenen Modelle und Werkzeuge auf Polyurethanbasis in der Praxis hervorragende Verschleisseigenschaften aufzeigen und kostengünstiger hergestellt werden können. Gegenüber herkömmlichen Harzen ergibt sich eine wesentlich höhere Lebensdauer der damit angefertigten Modelle. Weil das Abriebverhalten von Modellen durch theoretische Ueberlegungen nicht ermittelt werden kann, waren umfangreiche Tests zur Entwicklung der erfindungsgemässen Polyurethan-Zweikomponentensystems notwendig.

Die so erreichte Abriebfestigkeit lässt sich nachträglich mit einer optimalen Kombination von Oberflächenhärte, Oberflächenelastizität und Gleitmittel erklären. Die Oberflächenhärte sowie die Oberflächenelastizität sind chemisch betrachtet eine Frage der Vernetzungsdichte. Die Vernetzungsdichte ist gegeben durch die Funktionalität und Kettenlänge bzw. Molekulargewicht der zur Anwendung gelangenden Polyole und Isocyanate.

Die erforderliche Vernetzungsdichte wird durch Verwendung von drei- oder höherfunktionellen Polyolen mit einem Molekulargewicht von 200—800 entsprechend einer Hydroxilzahl zwischen 200—800 oder Mischungen davon mit einem linearen Polypropylenglykol mit einem Molekulargewicht von 500—3000 erreicht.

Trifunktionelle Polyole können beispielsweise Trimethylolpropan oder Glyzerin als Starter beinhalten, die Ketten sind in der Regel auf der Basis Propylenglykol und Ethylenglykol aufgebaut, für höhere Funktionalitäten werden entsprechend höherwertige Aklohole oder Amine, wie beispielsweise Ethylendiamin, Pentaerythrit oder Sucrose verwendet.

Als aromatische Isocyanate kommen aus Kostengründen vor allem die beiden grosstechnisch verfügbaren Typen TDI = Toluylendiisocyanat und MDI = Diphenylmethan-4,4'-diisocyanat im erfindungsgemässen Zweikomponentensystem zur Anwendung. Deren Funktionalität liegt im Falle von TDI und rein MDI bei 2. TDI kann in Form des reinen 2,4-Isomeren oder im Gemisch mit dem 2,6-Isomeren verwendet werden. Bevorzugt Anwendung finden roh-MID-typen mit einer Funktionalität von 2 bis 2,8. An Stelle dieser reinen Isocyanate können auch Prepolmere, das sind Reaktionsprodukte dieser Isocyanate mit Polyolen, verwendet werden. Auch undestillierte Rohprodukte, die höhere Anteile an 2,4-Isomeren sowie höhere Kondensate durch Verwendung von rohen Anilin-Formaldehyd-Harzen enthalten, können eingesetzt werden.

Weitere aromatische Isocyanate, welche eingesetzt werden können sind:

4,4'-Diisocyanato-3,3'-dimethyl-diphenylmethan
1,5-Diisocyanato-naphthalin
N,N'-(4,4'-Dimethyl-3,3'-diisocyanatodiphenyl)-uretdion
Bis-1,3-(isocyanatomethyl)-benzol.

Das im erfindungsgemässen Zweikomponentensystem enthaltene Gleitmittel wird bevorzugt in flüssiger Form eingesetzt. Bewährt haben sich Produkte, die als Schmiermittel bekannt sind, z.B. mineralische oder synthetische Oele, Weichmacher usw.

Als Additive für das erfindungsgemässe Zweikomponentensystem kommen insbesondere Reaktionsbeschleuniger, Stabilisatoren und Füllstoffe in Frage.

Von den verwendeten Reaktionsbeschleunigern haben sich tertiäre Amine als besonders wirksam erwiesen.

Das nachfolgende Beispiel erläutert die Herstellung von giessereitechnischen Modellen, und Werkzeugen mit dem erfindungsgemässen Zweikomponentensystem.

Beispiel

| | |
|---|---|
| Zu 88 Gew.-Teilen | eines trifunktionellen Polyoles gestartet mit Glycerin und mit Ketten auf Basis Propylenglykol mit einem Molekulargewicht von ca. 500 und einer OH-Zahl von von 360 wird als Schmiermittel |
| 4 Gew.-Teile | eines Paraffinöles der Viskosität 0,1 Pa·s (entsprechend 100 cp) bei 20°C hinzugefügt sowie |
| 8 Gew.-Teile | Ceolith, um das System zur Vermeidung von Blasenbildung wasserfrei zu halten. |

Zur Kontrolle der Reaktionsgeschwindigkeit wird dem Gemisch noch ein tertiäres Amin als Beschleuniger hinzugemischt. Die so erhaltene A-Komponente wird sodann mit 82 Teilen roh-MDI vermischt. Je nach verwendeter Beschleunigermenge beginnt das Gemisch sofort oder spätestens nach 60 sec. zu reagieren und erstarrt nach weiteren 5—10 Minuten in einer exothermen Reaktion zu der gewünschten festen Masse, die nach spätestens 24 Stunden endgültige Gebrauchseigenschaften aufzeigt. Die Vermischung erfolgt zweckmässigerweise durch Verwendung üblicher 2-Komponenten-Dosieraggregate (Nieder- oder Hochdruck) mit anschliessendem Giessen oder Spritzen.

Die gemäss dem Beispiel hergestellen Modelle zeichnen sich durch eine sehr dichte Oberflächenschicht aus, welche eine deutlich verbesserte Verschleissfestigkeit gegenüber Modellen aus bisher verwendeten Harzen zur Folge hat. Weitere Vorteile liegen im günstigeren Ausformverhalten der mit dem erfindungsgemässen Zweikomponentensystem angefertigten Modelle und der kurzen Topfzeit von ca. 60 Sekunden, welche einen wesentlich höheren Ausstoss von Kunstharzmodellen pro Zeiteinheit ermöglicht.

**Patentansprüche**

1. Zweikomponentensystem zur Herstellung von abriebfesten Modellen und Werkzeugen, insbesondere für Zwecke der Giessereiindustrie, dadurch gekennzeichnet, dass die A-Komponente mindestens ein tri- oder höherfunktionelles Polyol mit einem Molekulargewicht zwischen 200—800, entsprechend einer Hydroxylzahl zwischen 200—800 oder Mischungen davon mit einem linearen Polypropylenglykol mit einem Molekulargewicht von 500—3000, mindestens ein festes oder flüssiges Gleitmittel und übliche Additive enthält und die B-Komponente ein aromatisches Isocyanat oder Prepolymer hiervon enthält.

2. Zweikomponentensystem nach Anspruch 1, dadurch gekennzeichnet, dass die A-Komponente das Ethylenoxi- oder Propylenoxiaddukt an ein tri-funktionelles Polyol, beispielsweise Trimethylolpropan oder Glycerin, enthält.

3. Zweikomponentensystem nach Anspruch 1, dadurch gekennzeichnet, dass die A-Komponente ein tetra-bis octafunktionelles Polyol oder Polyamin enthält, welches beispielsweise Ethylendiamin, Pentaerythrit- oder Sucrose-Bausteine enthält.

4. Zweikomponentensystem nach Anspruch 1, dadurch gekennzeichnet, dass die A-Komponente

das Propylenoxidaddukt an ein Triol, vorzugsweise Glycerin, Trimethylolpropan, Trimethylolethan, Hexantriol-1.2.6., Pentaerythrit oder Hexite enthält.

5. Zweikomponentensystem nach einem der Ansprüche 1 bis 4, dadurch gekennzeichnet, dass die B-Komponente ein aromatisches Diisocyanat der allgemeinen Formel I

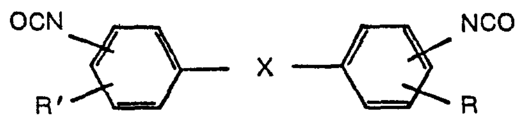

in der X einen Methylenrest oder eine $SO_2$-Gruppe und R und R′ ein H-Atom, ein Chloratom und/oder eine Methylgruppe bedeuten, oder ein Prepolymer hiervon enthält.

6. Zweikomponentensystem nach einem der Ansprüche 1 bis 5, dadurch gekennzeichnet, dass die B-Komponente Toluylendiisocyanat enthält.

7. Zweikomponentensystem nach Anspruch 5, dadurch gekennzeichnet, dass das aromatische Diisocyanat Methyldiphenyldiisocyanat, vorzugsweise 4,4′-Diisocyanatodiphenylmethan, in reiner oder roher Form ist.

8. Zweikomponentensystem nach Anspruch 7, dadurch gekennzeichnet, dass das aromatische Diisocyanat rohes Diphenylmethan-4,4′-diisocyanat mit einer Funktionalität von 2 bis 2,8 ist.

9. Zweikomponentensystem nach einem der Ansprüche 1 bis 8, dadurch gekennzeichnet, dass das aromatische Diisocyanat in Form eines Prepolymers, beispielsweise in Form eines Polyoladdukts, verwendet wird.

10. Zweikomponentensystem nach einem der Ansprüche 1 bis 9, dadurch gekennzeichnet, dass das Gleitmittel ein Schmiermittel, beispielsweise ein mineralisches oder synthetisches Oel oder ein Weichmacher, ist.

11. Zweikomponentensystem nach einem der Ansprüche 1 bis 10, dadurch gekennzeichnet, dass die A-Komponente als Additiv ein tertiäres Amin als Reaktionsbeschleuniger aufweist.

12. Zweikomponentensystem nach einem der Ansprüche 1 bis 11, dadurch gekennziechnet, dass die Reaktionsbeschleunigermenge derart bemessen ist, dass spätestens 1 Minute nach Vermischen der A- mit der B-Komponente die exotherme Additionsreaktion einsetzt und innerhalb von weiteren 5 bis 10 Minuten zum Erstarren des Gemisches führt, welches nach spätestens 24 Stunden die endgültigen Gebrauchseigenschaften aufweist.

13. Zweikomponentensystem nach einem der Ansprüche 1, 2, 4, 5, 7 bis 12, dadurch gekennzeichnet, dass die A-Komponente ein trifunktionelles Polyol gestartet mit Glycerin und mit Ketten auf Basis Propylenglykol mit einem Molekulargewicht von ca. 500 und einer OH-Zahl von ca. 360, ein Paraffinöl der Viskosität 0,1 Pa·s bei 20°C, ein tertiäres Amin sowie Ceolith enthält und die B-Komponente rohes Diphenylmethan-4,4′-diisocyanat enthält.

14. Zweikomponentensystem nach Anspruch 13, dadurch gekennzeichnet, dass die A-Komponente 88 Gew. % Polyol, 4 Gew. % Paraffinöl und 8 Gew. % Ceolith enthält und die B-Komponente 82 Gew. % der A-Komponente ausmacht.

15. Zweikomponentensystem nach einem der Ansprüche 1 bis 14, dadurch gekennzeichnet, dass die A-Komponente max. 35 Gew. %, vorzugsweise ca. 4 Gew. % Gleitmittel enthält.

16. Verwendung des Zweikomponentensystems gemäss einem der Ansprüche 1 bis 15 zur Herstellung von abriebfesten Modellen und Werkzeugen durch Mischen der Komponente A mit der Komponente B, vorzugsweise im stöchiometrischen Verhältnis.

17. Verwendung des Zweikomponentensystems gemäss Anspruch 16, dadurch gekennzeichnet, dass die vermischten A- und B-Komponenten auf einem Träger in einer maximal 5 mm dicken Schicht ausgehärtet werden.

18. Abriebfeste Modelle und Werkzeuge, insbesondere für Zwecke der Giessereiindustrie, hergestellt unter Verwendung des Zweikomponentensystems nach einem der Ansprüche 1 bis 15.

**Revendications**

1. Système à deux composants pour la fabrication de modèles et d'outils résistants à l'usure, notamment destinés à être utilisés dans l'industrie de la fonderie, caractérisé en ce que le constituant A contient au moins un polyol trifonctionnel ou à fonctionnalité supérieure possédant un poids moléculaire compris entre 200 et 800, conformément à un indice d'hydroxyle compris entre 200 et 800 ou bien des mélanges de ce polyol avec un polypropylèneglycol linéaire possédant un poids moléculaire compris entre 500 et 3000, au moins un agent de démoulage solide ou liquide et des additifs usuel, et que le constituant B contient un isocyanate aromatique ou un prépolymère de ce dernier.

2. Système à deux constituants selon la revendication 1, caractérisé en ce que le constituant A contient un produit d'addition d'oxyde d'éthylène ou d'oxyde de propylène à un polyol trifonctionnel, par exemple du triméthylolpropane ou de la glycérine.

3. Système à deux constituants selon la revendication 1, caractérisé en ce que le constituant A

contient un polyol tétra- à octafonctionnel ou une polyamine, qui contient par exemple des éléments d'éthylènediamine, de pentaérythrite ou de saccharose.

4. Système à deux constituants selon la revendication 1, caractérisé en ce que le constituant A contient le produit d'addition d'oxyde de propylène à un triol, de préférence de la glycérine, du triméthylolpropane, du triméthyloléthane, de l'hexantriol-1.2.6., de la pentaérythrite ou de la hexite.

5. Système à deux constituants selon l'une quelconque des revendications 1 à 4, caractérisé en ce que le constituant B est un di-isocyanate aromatique de formule générale I

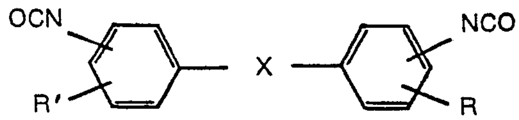

dans laquelle X est un reste méthylène ou un groupe $SO_2$ et R et R' un atome d'hydrogène, un atome de chlore et/ou un groupe méthyle, ou contient un prépolymère du di-isocyanate.

6. Système à deux constituants selon l'une quelconque des revendications 1 à 5, caractérisé en ce que le constituant B contient du di-isocyanate de toluylène.

7. Système à deux constituants selon la revendication 5, caractérisé en ce que le di-isocyanate aromatique est du di-isocyanate de méthylediphényle, de préférence du 4,4'-di-isocyanatodiphényleméthane, sous forme pure ou brute.

8. Système à deux constituants selon la revendication 7, caractérisé en ce que le di-isocyanate aromatique est un diphényleméthane-4,4'-di-isocyanate brut possédant une fonctionnalité allant de 2 à 2,8.

9. Système à deux constituants selon l'une quelconque des revendications 1 à 8, caractérisé en ce que le di-isocyanate aromatique est utilisé sous la forme d'un prépolymère par exemple sous la forme d'un produit d'addition du polyol.

10. Système à deux constituants selon l'une quelconque des revendications 1 à 9, caractérisé en ce que l'agent de démoulage est un lubrifiant, par exemple une huile minérale ou synthétique ou un plastifiant.

11. Système à deux constituants selon l'une quelconque des revendications 1 à 10, caractérisé en ce que le constituant A comporte, en tant qu'additif, une amine tertiaire servant d'accélérateur de réaction.

12. Système à deux constituants selon l'une quelconque des revendications 1 à 11, caractérisé en ce que la quantité de l'accélérateur de réaction est mesurée de telle manière que la réaction d'addition exothermique se produit tout au plus 1 minute après le mélange du constituant A et du constituant B et conduit en l'espace d'un intervalle de temps supplémentaire de 5 à 10 minutes, à la solidification du mélange qui possède, tout au plus 24 heures après, les propriétés caractéristiques d'utilisation définitives.

13. Système à deux constituants selon l'une quelconque des revendications 1, 2, 4, 5, 7 à 12, caractérisé en ce que le constituant A contient un polyol trifonctionnel amorcé par de la glycérine et avec des chaînes à base de propylèneglycol possédant un poids moléculaire égal à environ 500 et un indice d'hydroxyle d'environ 360, une huile de paraffine possédant une viscosité de 0,1 Pa.s à 20°C, une amine tertiaire ainsi que de la ceolithe, et que le constituant B contient du diphényleméthane-4,4'-di-isocyanate brut.

14. Système à deux constituants selon la revendication 13, caractérisé en ce que le constituant A contient 88% en poids de polyol, 4% en poids d'huile de paraffine et 8% en poids de ceolithe et que le constituant B représente 82% en poids du constituant A.

15. Système à deux constituants selon l'une quelconque des revendications 1 à 14, caractérisé en ce que le constituant A contient au maximum 35% en poids et de préférence environ 4% en poids d'un agent de démoulage.

16. Application du système à deux constituants selon l'une quelconque des revendications 1 à 15 pour fabriquer des modèles et des outils résistants à l'usure par mélange du constituant A avec le constituant B, de préférence dans un rapport stoechiométrique.

17. Application du système à deux constituants selon la revendication 16, caractérisé en ce que les constituants A et B mélangés sont durcis, sous la forme d'une couche possédant une épaisseur maximum de 5 mm, sur un support.

18. Modèles et outils résistants à l'usure, notamment destinés à être utilisés dans l'industrie de la fonderie, fabriqués grâce à l'utilisation du système à deux constituants selon l'une quelconque des revendications 1 à 15.

## Claims

1. Two-component system for producing wear-resistant models and tools, in particular for casting industry purposes, characterized in that the A-component contains at least a tri- or higher functional polyol with a molecular weight from 200 to 800, corresponding to a hydroxyl number between 200

and 800, or mixtures thereof with a linear polypropylene glycol with a molecular weight from 500 to 3000, at least one solid or liquid lubricant with usual additives, and that the B-component contains an aromatic isocyanate or pre-polymer thereof.

2. Two-component system according to claim 1, characterized in that the A-component contains the ethylene- or propyleneoxideadduct of a trifunctional polyol, e.g. trimethylolpropane or glycerine.

3. Two-component system according to claim 1, characterized in that the A-component contains a tetra- to octafunctional polyol or polyamine, which contains e.g. ethylenediamine, pentaerythrite- or sucrose-blocks.

4. Two-component system according to claim 1, characterized in that the A-component contains the propylene- oxideadduct to a triol, preferably glycerine, trimethylolpropane, trimethylolethane, hexanetriol-1.2.6., pentaerythrite or hexite.

5. Two-component system according to one of the claims 1 through 4, characterized in that the B-component contains an aromatic diisocyanate of the general formula

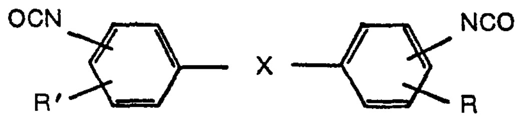

in which X is a methylene or a $SO_2$-group and R and R′ is hydrogen, chlorine and/or a methyl group, or a prepolymer thereof.

6. Two-component system according to one of the claims 1 through 5, characterized in that the B-component contains toluylene-diisocyanate.

7. Two-component system according to claim 5, characterized in that the aromatic diisocyanate is pure or raw methyldiphenyl-diisocyanate, preferably 4,4′-diisocyanate-diphenylmethane.

8. Two-component system according to claim 7, characterized in that the aromatic diisocyanate is raw diphenylmethane-4.4′-diisocyanate with a functionality from 2 to 2,8.

9. Two-component system according to one of the claims 1 through 8, characterized in that the aromatic diisocyanate is being used in the form a prepolymer, e.g. a polyoladduct.

10. Two-component system according to one of the claims 1 through 9, characterized in that the lubricant is a mineral oil, synthetic oil or a plasticizer.

11. Two-component system according to one of the claims 1 through 10, characterized in that the A-component contains as an additive a tertiary amine reaction accelerator.

12. Two-component system according to one of the claims 1 through 11, characterized in that the amount of the reaction accelerator is so chosen, that no later than one minute after mixing the A- with the B-component, the exothermal addition reaction starts and leads to solidification of the mixture within further 5 to 10 minutes, and that the mixture possesses its final properties of use within 24 hours.

13. Two-component system according to one of the claims 1, 2, 4, 5, 7 through 12, characterized in that the A-component contains a trifunctional polyol, started with glycerine and with chains on the basis of propyleneglycol with molecular weights of approx. 500 and a OH-number of approx. 360, a paraffin oil with a viscosity of 0,1 Pa·s at 20°C, a tertiary amine as well as ceolith, and that the B-component contains raw diphenylmethane-4,4′-diisocyanate.

14. Two-component system according to claim 13, characterized in that the A-component contains 88 weight-% polyol, 4 weight-% paraffin oil and 8 weight-% ceolith, and that the B-component is 82 weight-% of the A-component.

15. Two-component system according to one of the claims 1 through 14, characterized in that the A-component contains not more than 35 weight-%, preferably approx. 4 weight-%, lubricant.

16. Use of the two-component system according to one of the claims 1 through 15, for producing wear-resistant models and tools by mixing the A- with the B-component, preferably in a stoichiometric relation.

17. Use of the two-component system according to claim 16, characterized in that the mixed A- and B-components are hardened on a support in a layer with a thickness of 5 mm or less.

18. Wear-resistant models or tools, in particular for foundry purposes, produced by using the two-component system according to one of the claims 1 through 15.